# EUROPEAN PATENT SPECIFICATION

(11) **EP 2 660 140 B1**
(45) Date of publication and mention of the grant of the patent: **21.02.2018**
(21) Application number: 12166650.7
(22) Date of filing: 03.05.2012
(51) Int. Cl.: B63B 21/00, B63B 39/00, B63B 27/30

(54) **A docking device for facilitating a transfer between a vessel and an offshore structure**
Andockstation zur Erleichterung eines Transfers zwischen einem Schiff und einer Offshore-Struktur
Dispositif d'amarrage pour faciliter un transfert entre un navire et une structure en mer

(43) Date of publication of application: 06.11.2013
(73) Proprietor: Siemens Aktiengesellschaft, 80333 München (DE)
(72) Inventor: Borch-Jensen, Niels Joergen, 6852 Billum (DK); Soerensen, Johnny, 6920 Videbæk (DK)

(56) References cited:
- EP-A1- 2 423 098
- EP-A1- 2 428 442
- EP-A2- 1 695 902
- EP-A2- 2 298 641
- WO-A1-00/15489
- DE-A1-102010 004 077

## Description

The present invention relates to a docking device for facilitating a transfer between a vessel and an offshore structure, whereby the docking device comprises a first docking component mounted on said vessel and a second docking component mounted on said offshore structure.

Offshore structures, e. g. monopiles, jacket structures or floating structures are increasingly used in particular with the growing demand for offshore wind farms. For erection, maintenance and repair of such offshore structures a safe, secure and cost effective transfer of personnel and light weight equipment between vessels and offshore structures is required.

At present the transfer of personnel and equipment is performed by various vessel types and transfer systems. These range from transfer via small fast rescue boats till special vessels equipped with a motion compensated access platform.

Transfer vessels - with a so called intelligent bow fender - are known to facilitate transfer vessel to push towards bumper guards on e. g. a transition piece of a wind turbine installation detects the bollard push force applied on the fender which again is used to determine a minimum friction between fender and bumper guards on the monopile. The friction facilitates ability to maintain the bow of the vessel in a vertically stand still position. However, in practice a transfer is only possible when the fixed-in-position bumper guards on the transition piece can be accessed exactly. Depending on the direction and force of the wind and/or water current and/or waves it may be very difficult to firstly guide the vessel to the accurate position of the bumper guards, but also to maintain the vessel in correct position afterwards.

All known docking devices are not designed to operate in wave heights of more than 2 meters, accordingly the access of offshore structures is depending on weather or sea conditions.

EP 2 298 641 A2 discloses a docking device for facilitating a transfer between a vessel and an offshore structure whereby the docking device comprises a first docking component mounting on the vessel comprising two movable gripping arms attached in a pivoted manner to a frame part. The offshore structure comprises a second docking component realized by an impact shield in form of vertical tubes, which are attached to the lower end of the mast of the offshore structure, realized as a wind power plant. This connection allows a rotation of the vessel around the pivot point of the gripping means.

It is therefore an object of the present invention to provide a docking device which enables a transfer to and from offshore structures even in adverse weather conditions.

According to the present invention this object is achieved in the above defined docking device in that the first and second docking components are connectable such that bow or stern of the vessel can be safely elevated in relation to the sea surface beyond impact of actual sea state in the connected state.

The inventive docking device is based on the idea that a safe and secure access and transfer to and from an offshore structure is possible when bow or stern of the vessel can be established in a secure and fixed position in relation to a second docking component mounted on the offshore structure. In the secure and fixed position bow or stern of the vessel is elevated in relation to the sea surface so that wave movement or wave impact do not impair the transfer.

According to a further development of the inventive docking device it may be envisaged that the offshore structure comprises several second docking components disposed in circumferential direction. Accordingly the docking device is capable of docking in all directions by elevating bow or stern beyond wave impact allowing for a safe and secure transfer of personnel and equipment.

Preferably the first docking component is formed as a toothed wheel or a pinion and the second docking component is formed as a rack, whereby the first and second docking components act as a rack and pinion arrangement in the connected state. The rack and pinion connection is a strong and stable connection allowing bow or stern of the vessel to be elevated.

According to the invention the toothed wheel or the pinion of the first docking component can be actuated in order to elevate the vessel. Accordingly the transfer procedure starts with a docking procedure in which the first and second docking components are brought into a connected state followed by an elevation procedure. When the vessel has reached the elevated position a transfer of personnel and equipment from vessel to offshore structure and reverse is possible.

According to a second, alternative embodiment of the invention the first docking component may comprise a retractable hook and a second docking component is formed as a railing, whereby the hook locks to the railing in the connected state. This embodiment has the advantage that the offshore structure can be accessed in all directions so that docking manoeuvres for facilitating a transfer during adverse weather conditions are possible. During the docking procedure the retractable hook is connected to the railing of the offshore structure, afterwards the hook is retracted so that bow or stern of the vessel is elevated.

In the inventive docking device the first docking component may further comprise a wire which can be fixed at the railing in the connected state. The wire takes the load from the vessel and unloads the retractable hook.

A very safe and stable connection between the first docking component and the second docking component can be achieved when the hook comprises a hydraulic lock.

In the inventive docking device it may be envisaged that a fender is disposed between vessel and offshore structure in order to protect them.

Further the invention relates to a method for facilitating a transfer between a vessel and an offshore structure with a docking device.

According to the inventive method a docking device is used comprising a first docking component mounted on said vessel and a second docking component mounted on said offshore structure, whereby the first and second docking components are connected and bow or stern of the vessel are elevated safely beyond impact of actual sea state.

Further features of the invention are disclosed in the subclaims.

The invention and its underlying principle will be better understood when consideration is given to the following detailed description of preferred embodiments.

In the accompanying drawings:
- fig. 1: shows a vessel with an inventive docking device;
- fig. 2: shows the vessel of fig. 1 approaching an offshore structure;
- fig. 3: shows the connection of the vessel to the offshore structure;
- fig. 4: shows the elevation of the vessel;
- fig. 5: shows a vessel with an inventive docking device according to a second embodiment of the invention;
- fig. 6: shows the vessel of fig. 5 approaching an offshore structure;
- fig. 7: shows the connection of the vessel to the offshore structure;
- fig. 8: shows the vessel in an elevated state; and
- fig. 9: shows the vessel and the offshore structure of fig. 8, whereby a wire is used.

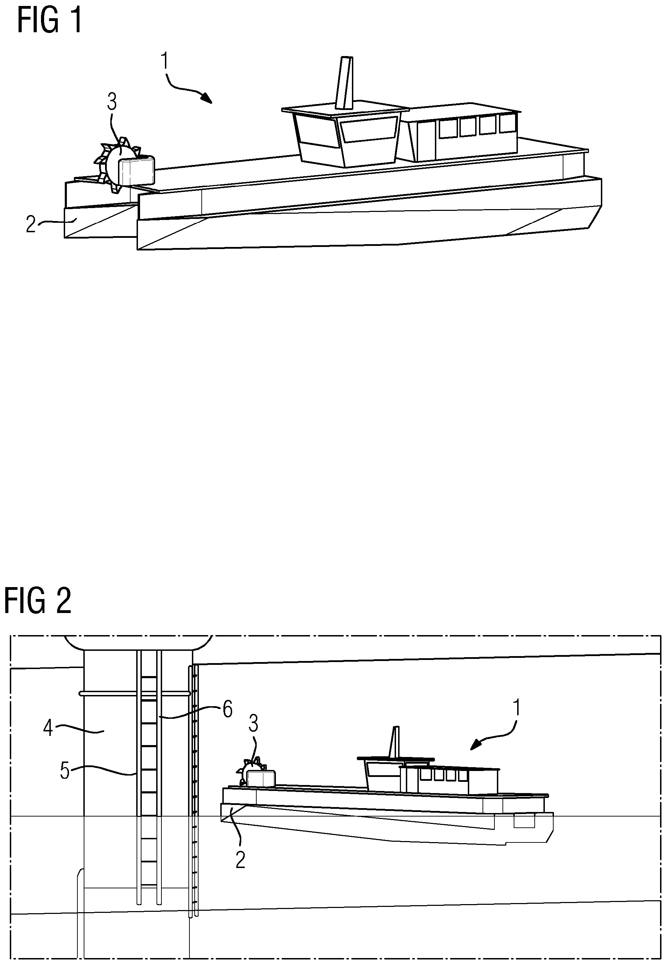

In fig. 1 a vessel 1 is shown which is equipped with a first docking component in the form of a pinion 3. Basically the pinion 3 is a toothed wheel which can be actuated, e. g. rotated by a motor. The rotatable pinion 3 is used for establishing a connected state with an offshore structure.

Fig. 2 shows the vessel 1 approaching an offshore structure 4. In this embodiment the offshore structure 4 is a monopile being used as a foundation for a wind turbine. However, the docking device can be used for other offshore structures like jackets, gravity foundations, drilling platforms or even semisubmersible structures as well.

The offshore structure 4 is provided with second docking components 5 which are formed similar to a ladder. Each of said second docking components 5 comprises two parallel struts 6, which are connected by cross struts 7. As can be seen in fig. 2 several second docking components 5 are provided in circumferential direction of the offshore structure 4.

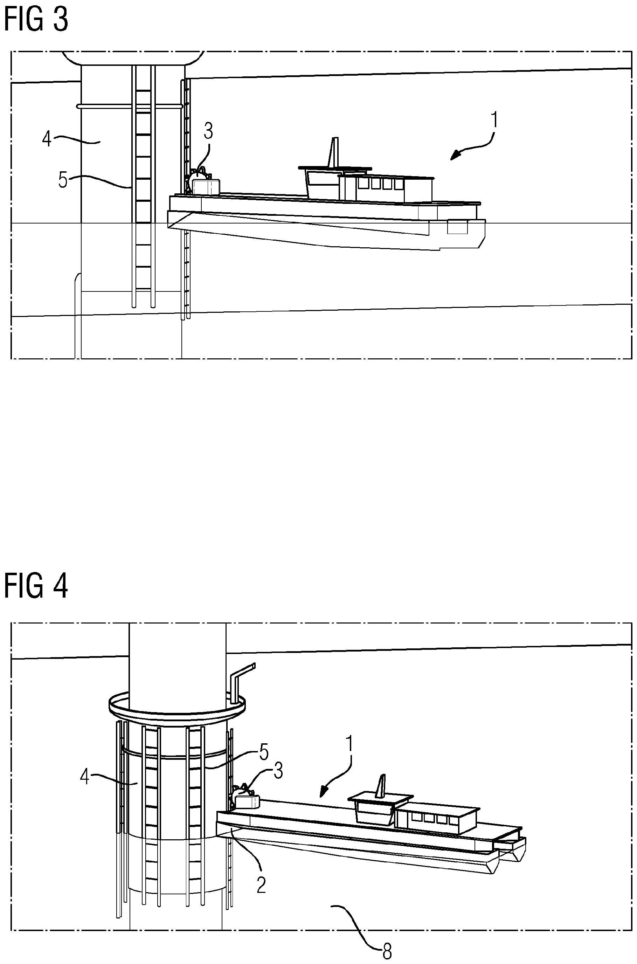

Fig. 3 shows vessel 1 and offshore structure 4 in a connected state. The toothed wheels of pinion 3 are engaged in the clearances of the second docking component 5 at the outer side of the offshore structure 4. This way stable and secure connection between vessel 1 and offshore structure 4 is established.

Fig. 4 shows vessel 1 and offshore structure 4 in the connected state. In the connected state the pinion 3 of the first docking component of the vessel 1 is rotated by a motor, consequently the bow 2 of the vessel 1 is elevated in relation to the sea surface 8. The pinion 3 fixes the bow 2 vertically. First the bow 2 is levelled highest as a result of wave movement. After fixing the bow 2 will be elevated another short distance, typically a few centimetres to ensure bow clearance of vertical wave impact. The procedure implies in theory that only or primarily static vertical forces between docking components shall be accounted for during docking and undocking. In this state the bow 2 of vessel 1 is elevated beyond wave impact. This allows for a safe and secure transfer of personnel and equipment to and from offshore structure 4. The docking device as shown in fig. 1 - 4 radically expands the weather window in which transfers can be performed compared to conventional docking devices.

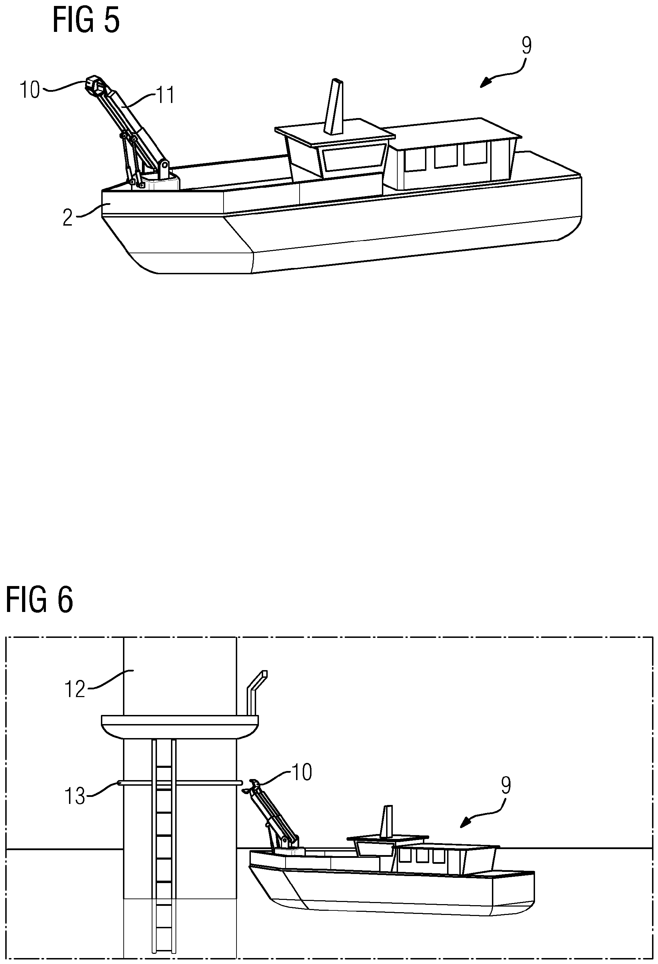

Fig. 5 shows another embodiment of a vessel 9 which is equipped with a first docking component in the form of a retractable hook 10. The hook 10 is disposed at a retractable boom 11 which is actuated hydraulically. Opening and closing the hook 10 is performed hydraulically as well.

Fig. 6 shows vessel 9 approaching an offshore structure 12. When the vessel 9 approaches the offshore structure 12 the hook 10 of the retractable boom 11 is open.

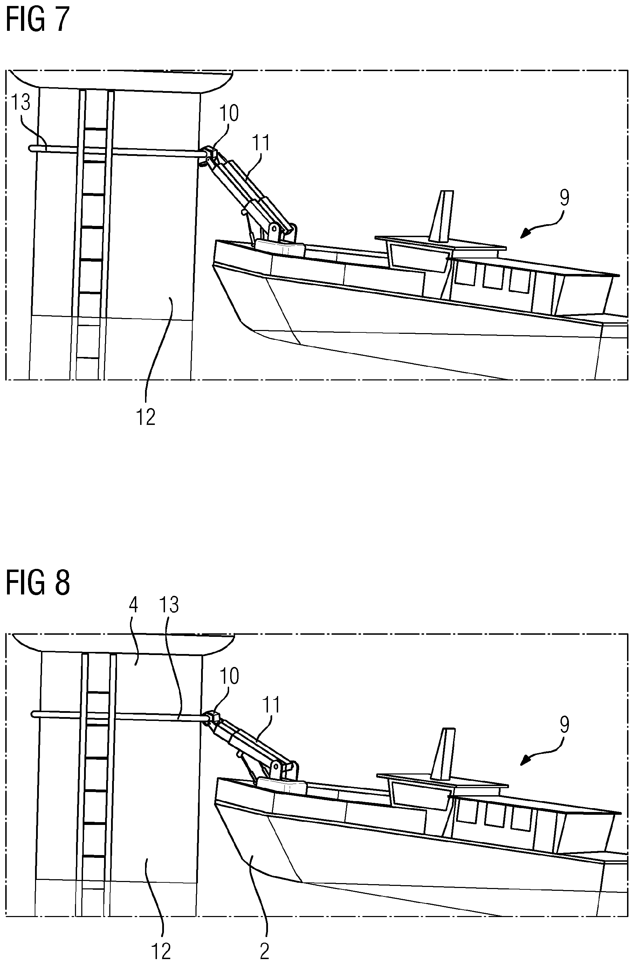

The offshore structure 12 is provided with a circular railing 13. Fig. 7 shows vessel 9 and offshore structure 12 in a connected state. Vessel 9 and boom 11 are steered until hook 10 reaches the railing 13. As the railing 13 is ring-shaped docking of hook 10 can take place even in adverse weather conditions. Once the vessel 9 has reached the offshore structure 12 the hook 10 is closed which clamps the railing 13. After a stable connection state has been reached the retractable boom 11 is actuated such that it is levelled so that the bow 2 of vessel 9 is elevated in relation to the sea surface. The vessel 9 is lifted with its bow 2 so that it is no longer impaired by wave movement.

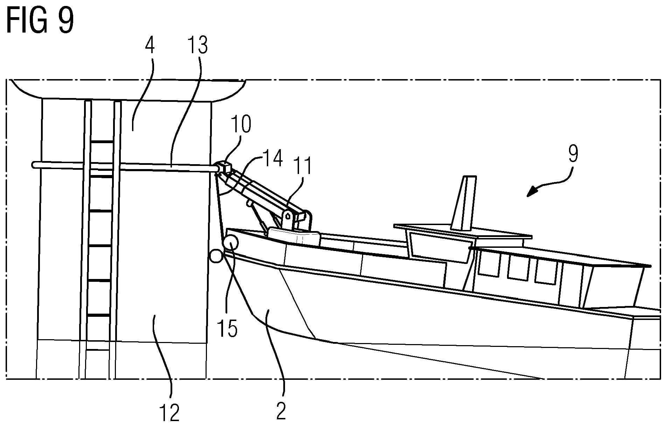

Fig. 9 shows a similar embodiment whereby an additional wire is used in the connected state. The wire 14 is provided on a roll 15 on the vessel 9. After the connection between the first docking component, namely hook 10 and boom 11 and the second docking component, namely railing 13, has been established the wire 14 is in addition fixed at railing 13 so that the wire 14 takes the load from the vessel 9. In this connected state a transfer of personnel and equipment is possible in both directions.

All above inventions implies a system operation, which eliminate or significantly reduce dynamic forces to be obtained in the docking system.

Although the present invention has been described in detail with reference to the preferred embodiment, the present invention is not limited by the disclosed examples from which the skilled person is able to derive other variations without departing from the scope of the invention.

## Claims

1. A docking device for facilitating a transfer between a vessel (1) and an offshore structure (4), whereby the docking device comprises a first docking component mounted on said vessel (1) and a second docking component (5) mounted on said offshore structure (4), **characterized in that** the first and second docking components (5) are connectable such that bow (2) or stern of the vessel (1) can be safely elevated in relation to the sea surface beyond impact of actual sea state in the connected state.

2. A docking device according to claim 1, **characterized in that** the offshore structure (4) comprises several second docking components (5) disposed in circumferential direction.

3. A docking device according to claim 1 or 2, **characterized in that** the first docking component is formed as a toothed wheel or a pinion (3) and the second docking component is formed as a rack, whereby the first and second docking components act as a rack and pinion arrangement in the connected state.

4. A docking device according to claim 3, **characterized in that** the toothed wheel or the pinion (3) can be actuated in order to elevate the vessel (1).

5. A docking device according to claim 1 or 2, **characterized in that** the first docking component comprises a retractable hook (10) and the second docking component is formed as a railing (13), whereby the hook (10) locks to the railing (13) in the connected state.

6. A docking device according to claim 5, **characterized in that** the first docking component further comprises a wire (14) which can be fixed at the railing (13) in the connected state.

7. A docking device according to claim 5 or 6, **characterized in that** the hook (10) comprises a hydraulic lock.

8. A method for facilitating a transfer between a vessel (1) and an offshore structure (4) using a docking device, whereby a docking device is used comprising a first docking component mounted on said vessel (1) and a second docking component (5) mounted on said offshore structure, **characterized in that** the first and second docking components (5) are connected such that bow (2) or stern of the vessel (1) is safely elevated in relation to the sea surface beyond impact of actual sea state in the connected state.

9. A method according to claim 8, **characterized in that** the first docking component is formed as a toothed wheel or a pinion (3) and the second docking component is formed as a rack, whereby the first and second docking component (5) are used as a rack and pinion arrangement in the connected state.

10. A method according to claim 8, **characterized in that** the first docking component comprises a retractable hook (10) and the second docking component is formed as a railing (13), whereby the hook (10) locks to the railing (13) in the connected state.

## Patentansprüche

1. Anlegevorrichtung zum Erleichtern eines Transfers zwischen einem Wasserfahrzeug (1) und einer Offshore-Konstruktion (4), wobei die Anlegevorrichtung eine an dem Wasserfahrzeug (1) befestigte erste Anlegekomponente und eine an der Offshore-Konstruktion (4) befestigte zweite Anlegekomponente (5) umfasst, **dadurch gekennzeichnet, dass** die erste und die zweite Anlegekomponente (5) so verbindbar sind, dass sich der Bug (2) oder das Heck des Wasserfahrzeugs (1) in Bezug zur Meeresoberfläche im verbundenen Zustand so weit sicher anheben lässt, dass sich der gegenwärtige Seegang nicht mehr darauf auswirkt.

2. Anlegevorrichtung nach Anspruch 1, **dadurch gekennzeichnet, dass** die Offshore-Konstruktion (4) mehrere zweite Anlegekomponenten (5) umfasst, die in Umfangsrichtung angeordnet sind.

3. Anlegevorrichtung nach Anspruch 1 oder 2, **dadurch gekennzeichnet, dass** die erste Anlegekomponente als Zahnrad oder als Ritzel (3) und die zweite Anlegekomponente als Zahnstange ausgebildet ist, wobei die erste und die zweite Anlegekomponente im verbundenen Zustand als Zahnstangenanordnung fungieren.

4. Anlegevorrichtung nach Anspruch 3, **dadurch gekennzeichnet, dass** das Zahnrad oder das Ritzel (3) zwecks Anheben des Wasserfahrzeugs (1) betätigt werden kann.

5. Anlegevorrichtung nach Anspruch 1 oder 2, **dadurch gekennzeichnet, dass** die erste Anlegekomponente einen einfahrbaren Haken (10) umfasst und die zweite Anlegekomponente als Reling (13) ausgebildet ist, wobei sich der Haken (10) im verbundenen Zustand mit der Reling (13) verriegeln lässt.

6. Anlegevorrichtung nach Anspruch 5, **dadurch gekennzeichnet, dass** die erste Anlegekomponente ferner ein Seil (14) umfasst, das im verbundenen Zustand an der Reling (13) fixiert werden kann.

7. Anlegevorrichtung nach Anspruch 5 oder 6, **dadurch gekennzeichnet, dass** der Haken (10) eine hydraulische Verriegelung umfasst.

8. Verfahren zum Erleichtern eines Transfers zwischen einem Wasserfahrzeug (1) und einer Offshore-Konstruktion (4) unter Verwendung einer Anlegevorrichtung, wobei eine Anlegevorrichtung verwendet wird, die eine an dem Wasserfahrzeug (1) befestigte erste Anlegekomponente (1) und eine an der Offshore-Konstruktion befestigte zweite Anlegekomponente (5) umfasst, **dadurch gekennzeichnet, dass** die erste und die zweite Anlegekomponente (5) so verbunden werden, dass der Bug (2) oder das Heck des Wasserfahrzeugs (1) in Bezug zur Meeresoberfläche im verbundenen Zustand so weit sicher angehoben wird, dass sich der gegenwärtige Seegang nicht mehr darauf auswirkt.

9. Verfahren nach Anspruch 8, **dadurch gekennzeichnet, dass** die erste Anlegekomponente als Zahnrad oder als Ritzel (3) und die zweite Anlegekomponente als Zahnstange ausgebildet ist, wobei die erste und die zweite Anlegekomponente (5) im verbundenen Zustand als Zahnstangenanordnung verwendet werden.

10. Verfahren nach Anspruch 8, **dadurch gekennzeichnet, dass** die erste Anlegekomponente einen einfahrbaren Haken (10) umfasst und die zweite Anlegekomponente als Reling (13) ausgebildet ist, wobei sich der Haken (10) im verbundenen Zustand mit der Reling (13) verriegeln lässt.

## Revendications

1. Dispositif d'amarrage destiné à faciliter un transfert entre un navire (1) et une structure en mer (4), dans lequel le dispositif d'amarrage comprend un premier composant d'amarrage installé sur ledit navire (1) et un deuxième composant d'amarrage (5) installé sur ladite structure en mer (4), **caractérisé en ce que** les premier et deuxième composants d'amarrage (5) peuvent être raccordés de telle manière que la proue (2) ou la poupe du navire (1) peut être exhaussée en sécurité par rapport à la surface de la mer sans que l'état réel de la mer ait un impact à l'état raccordé.

2. Dispositif d'amarrage selon la revendication 1, **caractérisé en ce que** la structure en mer (4) comprend plusieurs deuxièmes composants d'amarrage (5) agencés dans une direction circonférentielle.

3. Dispositif d'amarrage selon la revendication 1 ou 2, **caractérisé en ce que** le premier composant d'amarrage est formé à la manière d'une roue dentée ou d'un pignon (3) et le deuxième composant d'amarrage est formé à la manière d'une crémaillère, dans lequel les premier et deuxième composants d'amarrage fonctionnent à la manière d'un agencement crémaillère et pignon à l'état raccordé.

4. Dispositif d'amarrage selon la revendication 3, **caractérisé en ce que** la roue dentée ou le pignon (3) peut être actionné(e) afin d'exhausser le navire (1).

5. Dispositif d'amarrage selon la revendication 1 ou 2, **caractérisé en ce que** le premier composant d'amarrage comprend un crochet rétractable (10) et le deuxième composant d'amarrage est formé à la manière d'une rampe (13), dans lequel le crochet (10) se verrouille à la rampe (13) à l'état raccordé.

6. Dispositif d'amarrage selon la revendication 5, **caractérisé en ce que** le premier composant d'amarrage comprend en outre un câble (14) qui peut être fixé à la rampe (13) à l'état raccordé.

7. Dispositif d'amarrage selon la revendication 5 ou 6, **caractérisé en ce que** le crochet (10) comprend un verrouillage hydraulique.

8. Procédé permettant de faciliter un transfert entre un navire (1) et une structure en mer (4) à l'aide d'un dispositif d'amarrage, dans lequel un dispositif d'amarrage est utilisé, qui comprend un premier composant d'amarrage installé sur ledit navire (1) et un deuxième composant d'amarrage (5) installé sur ladite structure en mer, **caractérisé en ce que** les premier et deuxième composants d'amarrage (5) sont raccordés de telle manière que la proue (2) ou la poupe du navire (1) est exhaussée en sécurité par rapport à la surface de la mer sans que l'état réel de la mer ait un impact à l'état raccordé.

9. Procédé selon la revendication 8, **caractérisé en ce que** le premier composant d'amarrage est formé à la manière d'une roue dentée ou d'un pignon (3) et le deuxième composant d'amarrage est formé à la manière d'une crémaillère, dans lequel les premier et deuxième composants d'amarrage (5) sont utilisés à la manière d'un agencement crémaillère et pignon à l'état raccordé.

10. Procédé selon la revendication 8, **caractérisé en ce que** le premier composant d'amarrage comprend un crochet rétractable (10) et le deuxième composant d'amarrage est formé à la manière d'une rampe (13), dans lequel le crochet (10) se verrouille à la rampe (13) à l'état raccordé.
